# EUROPEAN PATENT APPLICATION

(11) **EP 0 869 692 A1**
(43) Date of publication of application: **07.10.1998**
(21) Application number: 97302158.7
(22) Date of filing: 01.04.1997
(51) Int. Cl.: H04Q 7/38

(54) **User authentication across multiple telecommunications network**

(71) Applicant: ICO Services Ltd., London W6 9BN (GB)
(72) Inventor: Goerke, Thomas, Middlesex, HA7 3PN (GB)
(74) Representative: Read, Matthew Charles

(57) **Abstract**

Authentication of a voice channel user terminal UT 1, for a packet data communications network provided by a satellite telecommunications system, is achieved by using data from a SIM card associated with the user terminal and corresponding authentication data held in an authentication centre AuC associated with a conventional GSM network used for voice channel communications with the user terminal. The authentication data is communicated from the GSM network to the satellite packet data network and authentication is carried out in a network adminstration station NASS or an interworking function unit IWF between the networks or at a satellite network MSSC.

## Description

This invention relates to authenticating a mobile user terminal for more than one telecommunications network and has particular but not exclusive application to a satellite telecommunication network for providing telecommunication coverage to mobile user terminals, such as mobile telephone handsets.

Terrestrial mobile telecommunications systems are well known and a number of different systems have developed which operate according to different standards. These public land mobile networks (PLMNs) may operate according to analog or digital standards. In Europe, the Far East, excluding Japan and elsewhere, the digital Global System Mobile (GSM) network has become popular, whereas in USA, the Advanced Mobile Phone System (AMPS) and the Digital American Mobile Phone System (DAMPS) are used, whereas in Japan, the Personal Handiphone System (PHS) and the Personal Digital Communication (PDC) network are in use. More recently, proposals have been made for a Universal Mobile Telecommunications System (UMTS). These networks are all cellular and land-based.

Considering for example the GSM system, individual cells of the mobile network are served by a series of geographically spaced, terrestrial base transceiver stations (BTSs) which are coupled through base switching centres (BSCs) to a mobile switching centre (MSC) which may provide a gateway out of the network to a conventional public switched telephone network (PSTN). The network includes a home location register (HLR) which stores information about the subscribers to the system and their user terminals. When a user terminal is switched on, it registers with the HLR and an authentication procedure is carried out. Each mobile user terminal is provided with a smart card known as a subscriber identification module (SIM) which stores two unique items of identification in order to identify the subscriber. The first item comprises an international mobile subscriber identity (IMSI) and second item comprises a secret parameter referred to in the GSM specifications as Ki. Associated with the HLR is an authentication centre (AuC) which includes data corresponding to the IMSI and Ki for each subscriber to the network. When the user terminal is switched on, and at other times, the IMSI is transmitted from the user terminal to the HLR, which then refers to the AuC in order to authenticate the user. The IMSI is checked in the memory of the AuC, and a corresponding value of Ki is retrieved. Also, a random number RAND is generated in the AuC. The random number RAND and the value of Ki are applied as inputs to an algorithm referred to in the GSM Specifications as A3 to generate a signed result SRES. The AuC also includes an algorithm referred to in the GSM Specifications as A8 which generates a secret key Kc that is used for encryption/decryption of data transmitted over the air between the user terminal and the landbased network. In practice, the algorithms A3/A8 may be constituted by a single algorithm producing a 96 bit output of which 32 bits constitute SRES and the remaining 64 bits constitute Kc. A triplet of signals comprising RAND, SRES and Kc is fed from the AuC, through the HLR to the MSC, which acts as a checking station in the authentication procedure.

The individual value of RAND is then transmitted on to the user terminal through the network from the MSC. The SIM of the user terminal has the algorithm A3/A8 stored locally, so as to generate a corresponding value of SRES' and Kc at the user terminal, from the received value of the random number RAND and the stored value of Ki in the SIM.

The value of SRES' is transmitted back through the network to the MSC and compared with the originally generated value of SRES. If they are the same, the user terminal is authenticated but otherwise registration of the user terminal with the HLR is barred.

Thereafter, if the user terminal is authenticated the MSC initiates encryption/decryption of data transmitted over the network, using an enciphering/deciphering algorithm referred to in the GSM Specifications as A5, which uses as its inputs the secret key Kc and the frame number of data transmitted through the network. The SIM of the user terminal generates its own value of the secret key Kc using its locally stored copy of the algorithm A8. The local value of Kc at the user terminal can then be used to encrypt/decrypt data transmitted, using a locally held copy of the algorithm A5.

The authentication procedure used in GSM has the advantage that only random numbers are transmitted over the air interface between the user terminal and the BTS, which minimises the risk of fraudulent registration.

For further details of the authentication procedure and subsequent data encryption/decryption, reference is directed to "The GSM System for Mobile Communications" M. Mouly & M-B. Pautet, Cell & Sys.1992 pp 477-492.

If the user terminal roams to a different GSM network, in a different geographical location, it registers with a visitor location register (VLR) of the visited network, which communicates with the HLR of the home network for billing and other purposes. DAMPS, PHS and PDC networks include similar location registers.

Prior analog PLMNs have supported a digital packet data service which can be used to transmit facsimile and e-mail messages to and from mobile user terminals. For example, AMPS networks can support the Cellular Digital Packet Data (CDPD) protocol which allows data packets to be transmitted during gaps in the voice transmission. For a more detailed description of the CDPD system reference is directed to "Cellular Digital Packet Data" M. Streetharan and R. Kumar, Artech House Publishers, 1996 (ISBN-0-89006-709-0). However current digital PLMNs such as DAMPS and GSM suffer from the disadvantage that they do not support such a digital packet data service.

Mobile telecommunication systems have been proposed that use satellite communication links between mobile user terminals and conventional terrestrial networks such as PSTNs and PLMNs. One network known as the IRIDIUM™ satellite cellular system is described in EP-A-0365885 and US Patent No. 5 394 561 (Motorola), which makes use of a constellation of so-called low earth orbit (LEO) satellites, that have an orbital radius of 780 km. Mobile user terminals such as telephone handsets establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed with an orbital radius in the range of 10-20,000 km and reference is directed to Walker J.G. "Satellite Patterns for Continuous Multiple Whole Earth Coverage" Royal Aircraft Establishment, pp 119-122 (1977). Reference is directed to the ICO™ satellite cellular system described for example in GB-A-2 295 296, and to the ODYSSEY™ satellite cellular system described in EP-A- 0 510 789. With these systems, the satellite communication link does not permit communication between adjacent satellites and instead, a signal from a mobile user terminal such as a mobile handset is directed firstly to the satellite and then directed to a ground station or satellite access node (SAN), connected to conventional land-based telephone network. This has the advantage that many components of the system are compatible with known digital terrestrial cellular technology such as GSM. Also simpler satellite communication techniques can be used than with a LEO network.

In satellite communications networks, ground stations are located at different sites around the world in order to communicate with the orbiting satellites. In the ICO™ system and others, a visitor location register is associated with each of the satellite ground stations, which maintains a record of the individual user terminals that are making use of the particular ground station. It has been proposed that satellite communication networks provide a digital satellite packet data network (SPDN) to allow e-mail, fax and transmission of other data. For example, the ICO™ system is configured to support such a packet data network.

In certain areas of the world, coverage provided by a conventional terrestrial PLMN and the satellite network will overlaps in a common area. It has been proposed that the individual mobile terminals be operable with both the PLMN and the satellite network. The user terminals may include a switch to allow the user to select the network or alternatively, an automatic selection may be made e.g. on the basis of signal strength. It is envisaged that normally, the conventional terrestrial network will be preferred for reasons of cost and signal strength. However, for some PLMNs it would be convenient to provide some services for the user terminal through the satellite network and others through the PLMN. For example, digital land based networks such as GSM and like, do not currently support a digital packet data service, so it would be convenient to use the satellite network as an extension of the PLMN in order to use the digital packet data network provided by the satellite network for data transmission.

The present invention concerns authentication of a user terminal for operation with more than one network, for example, so that voice channel communication can be carried out through one telecommunications network such as a digital PLMN, and digital packet data communication can be carried through another network such as a satellite network.

Broadly stated, the invention provides method of authenticating a mobile user terminal for use with a first or a second mobile network providing coverage in a common area for communication with the user terminal, wherein the user terminal is operable according to a predetermined authentication procedure which makes use of an individual identification code held in the user terminal and a corresponding identification code held at a remote authentication centre, the method comprising: accessing the authentication centre through a selected one of the networks to retrieve authentication data corresponding to the identification code stored in the user terminal; and performing an authentication of the user terminal for the selected network, using the authentication data retrieved from the authentication centre and data from the user terminal.

The first network may support transmission of signals in a first mode such as voice signals, and the second network may support transmission of signals in a second mode such as digital packet data signals.

The invention also provides a telecommunications system including: first and a second mobile networks providing coverage in a common area for communication with a mobile user terminal operable according to a predetermined authentication procedure which makes use of an individual identification code held in the user terminal; an authentication centre that includes authentication data corresponding to the identification code stored in the user terminal; means for directing data from the user terminal corresponding to the identification code either from the first network or the second network to the authentication centre to retrieve the authentication data corresponding to the identification code; and means for performing an authentication of the user terminal for the selected network, using the authentication data retrieved from the authentication centre and data from the user terminal.

The invention also provides a method of authenticating a user terminal communication with a first mobile network, wherein the user terminal is operable with a second mobile network which provides overlapping coverage with the first network and uses a predetermined authentication procedure for the user terminal, the procedure making use of an individual identification code held in the user terminal and a corresponding identification code held at a location in the second network, the method comprising: accessing the second network from the first network to retrieve authentication data corresponding to the identification code held at said location in the second network; and performing an authentication of the user terminal in the first network, using the authentication data retrieved from the second network and data from the mobile terminal.

The first network may comprise a satellite telecommunications network and the second network may comprise a PLMN.

The present invention may make use of an authentication procedure for a voice network to authenticate communication through a digital packet data network.

More specifically, the invention includes a method of authenticating a mobile user terminal for use with a digital packet data network, wherein the user terminal is operable for voice channel communication with a mobile network which uses a predetermined authentication procedure for the voice channel, the procedure making use of an individual identification code held in the mobile terminal and a corresponding identification code held at a location in the network that provides the voice channel, the method comprising:
accessing the mobile network that provides the voice channel, from the digital packet data network to retrieve authentication data corresponding to the identification code held at said location in the mobile network that provides the voice channel; and
performing an authentication of the user terminal in the digital packet data network, using the authentication data retrieved from the mobile network and data from the mobile terminal.

The digital packet data network may utilise a satellite communication link to the mobile user terminal, and the voice channel may be provided by a land based public mobile network, for example a GSM network.

The method according to the invention may include transmitting identification data corresponding to the identification code held at the user terminal, from the terminal to the digital packet data network; routing the identification data from the digital packet data network to an authentication centre in the voice network; deriving the authentication data from the authentication centre in response to the identification data; interrogating the mobile terminal for data corresponding to authentication data; and comparing data derived from the terminal in response to the interrogation, with the authentication data, to determine whether the terminal may be used on the digital packet data network.

In order that the invention may be more fully understood an embodiment thereof will now be described by way of example with reference to the accompanying drawings, in which:
Figure 1 is a schematic diagram of a satellite telecommunications system together with a local, land-based mobile telecommunications system, in accordance with the invention;
Figure 2 is a more detailed block diagram of the satellite network in the vicinity of SAN 1 and the associated terrestrial cellular network, for illustrating interworking;
Figure 3 is a schematic block diagram illustrating intercommunication within the satellite network;
Figure 4 is a schematic diagram of a mobile user terminal;
Figure 5 is a schematic block diagram of the circuits of the terminal shown in Figure 4;
Figure 6 is a schematic block diagram of the SIM card shown in Figures 4 and 5;
Figure 7 is a schematic diagram of data flows associated with authentication of the GSM, PLMN 9;
Figure 8 is a schematic illustration of a first embodiment of an authentication procedure for the SPDN;
Figure 9 is a schematic illustration of a second embodiment of an authentication procedure for the SPDN;
Figure 10 is a schematic illustration of a third embodiment of an authentication procedure for the SPDN; and
Figure 11 illustrates schematically the transmission of data between various components in the networks for the authentication procedure.

### Satellite Network

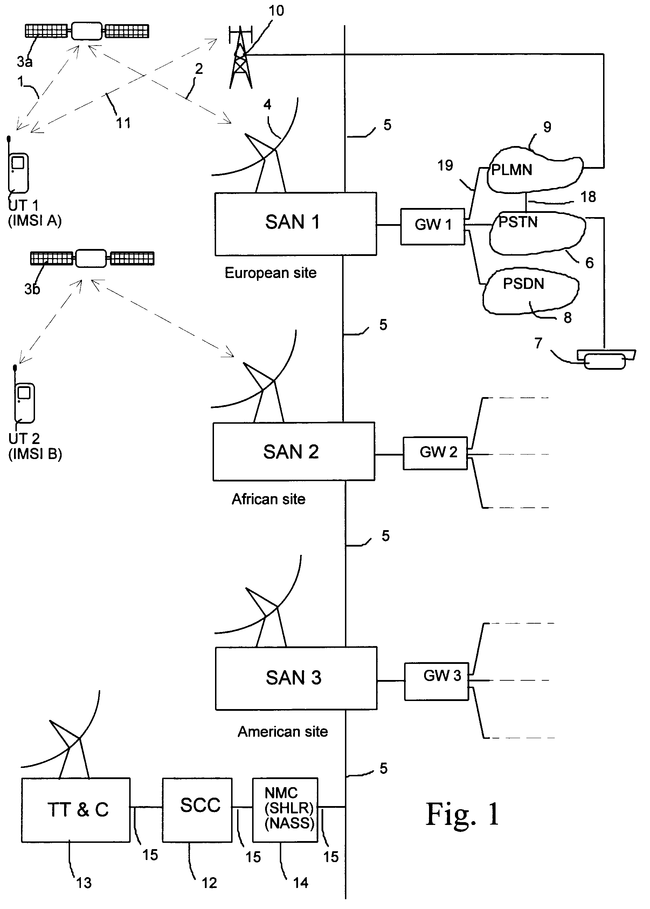

Referring to Figure 1, a schematic block diagram of a satellite mobile telecommunication network is shown corresponding generally to the ICO™ network. A mobile user terminal UT 1 in the form of a mobile telephone handset can communicate on a radio channel over a communication path 1, 2 via an earth orbiting satellite 3a with a land-based satellite access node SAN 1. As shown schematically in Figure 1, SAN 1 is provided with an antenna 4 which can track the orbiting satellite.

A number of the satellite access nodes SAN 1, 2, 3, etc are connected together to form a backbone network 5, which is connected through a number of gateways GW 1, 2, 3, etc to conventional land-based telephone networks. For example, considering the gateway GW1, it is connected to a land-based public switch telephone network (PSTN) 6, which permits connection to be made to a conventional telephone set 7. The gateway GW1 is additionally connected to a public switch data network (PSTN) 8 and a public local mobile network (PLMN) 9. Each of the gateways GW 1,2,3 may comprise commercially available mobile switching centres (MSCs) of the type used in GSM networks.

As shown in Figure 1, the handset UT 1 can also communicate with the conventional land-based mobile network PLMN 9, which is shown schematically to include a transceiver station 10 that establishes a duplex link 11 with the user terminal UT 1. In this example, the PLMN 9 is a GSM network. For a fuller understanding of GSM, reference is directed to the various GSM Recommendations issued by the European Telecommunications Institute (ETSI). Also reference is directed to "The GSM System for Mobile Communications" by M. Mouly and M-B. Pautet, ***supra***, for a more easily understandable synopsis.

The satellite network is designed to provide worldwide coverage and the satellites 3a, 3b form part of a constellation of satellites, which may be arranged in several orbits. In one example, two orbits of five satellites are used, which can be shown to provide coverage of a major part of the surface of the earth, in which for a 10° satellite elevation angle, one satellite can be accessed by the mobile handset all of the time and two satellites can be accessed for at least 80% of the time, thereby providing system diversity. Further satellites may be included in the constellation in order to provide additional redundancy and diversity.

The satellites are typically arranged in a MEO constellation, for example with an orbital radius of 10,355 km, although the invention is not restricted to a particular orbital radius. In this embodiment, satellites 3a, 3b are shown in a common orbit and the satellites are tracked by the antenna arrangement of each SAN. Typically, each SAN includes five antennas for tracking individual satellites of the constellation. The SANs are spaced around the earth in order to provide continuous coverage. In the example shown, SAN 1 may be located in Europe whereas SAN 2 may be located in Africa, SAN 3 in America and other SANs may be located elsewhere. In Figure 1, the SAN 2 is shown communicating with user terminal UT 2 via satellite 3b. For further details of the satellite network, reference is directed to GB-A-2 295 296.

The satellites 3a, 3b are in non-geostationary orbits and comprise generally conventional satellites such as the Hughes HS 601 and may include features disclosed in GB-A-2 288 913. Each satellite 3a, 3b is arranged to generate an array of beams covering a footprint on the earth beneath the satellite, each beam including a number of different frequency channels and time slots as described in GB-A-2 293-725. The beams thus provide adjacent cellular areas which correspond to the cells of a conventional land-based mobile telephone network. The satellites are controlled by means of a satellite control centre (SSC) 12 and a tracking telemetry and control station (TT&C) 13, which are connected to a network management centre 14 through a digital network 15 that is coupled to the backbone network 5. The SSC 12 and the TT&C 13 control operation of the satellites 3a, 3b, e.g. for setting the transmission power levels and transponder input tuning, as directed by the NMC 14. Telemetry signals for the satellites 3a, 3b are received by the TT&C 13 and processed by the SSC 12 to ensure that the satellites are functioning correctly.

During a telephone call, the handset UT 1, 2 communicates with the satellite 3a, 3b via a full duplex channel comprising a down link channel and an up link channel. The channels include TDMA time slots on frequencies allocated on initiation of the call. The satellite link can be used for voice communication and can also be used for satellite digital packet data communication e.g. at a data rate in a range of 2.4-64 kbps for facsimile, text message, e-mail or other packet data transmission between the user terminal and the SAN. The satellite network thus supports a satellite digital packet network (SPDN).

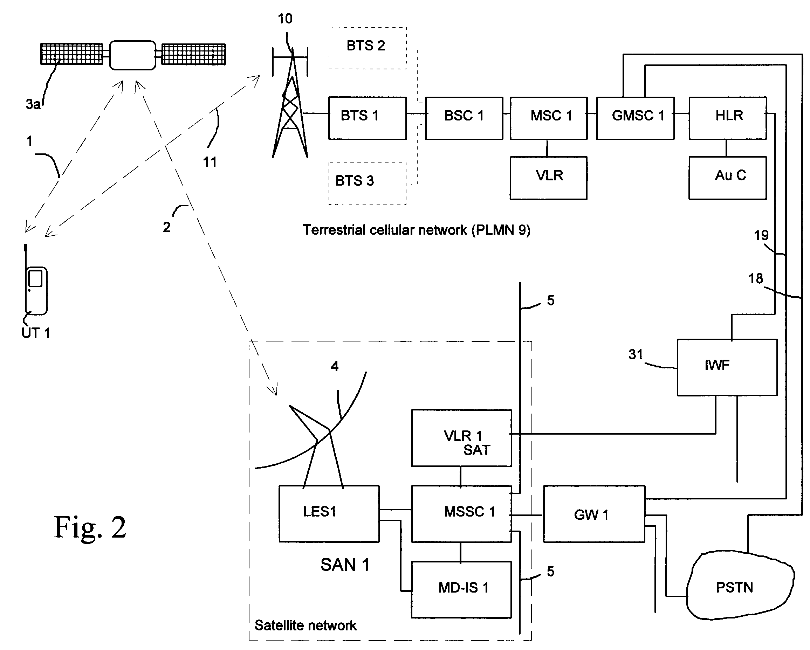

Referring to Figure 2, the configuration of SAN 1 and the local PLMN 9 is shown in more detail. SAN 1 consists of a land earth station LES 1 which is coupled to the five dish antennas 4 for tracking the satellites, the LES 1 including transmitter and receiver circuits with amplifiers, multiplexers, demultiplexer and codecs. A mobile satellite switching centre MSSC 1 is coupled to LES1 and to a satellite visitor location register VLR_{SAT}1. MSSC 1 couples communication signals (voice and packet data) to the backbone network 5 and to the LES 1, so as to allow individual telephone calls to be established through the backbone network 5 and the duplex communication link 1, 2 via the satellite 3a, to the mobile terminal UT 1. The MSSC 1 responds to addresses on incoming communication signals from the antenna 4 to route the signals appropriately to their destinations.

The VLR_{SAT}1 maintains a record of each of the subscribers, namely the IMSIs of each of the user terminals UT that are making use of the SAN 1 for signal communication.

Additionally, in order to control the flow of packet data signals around the SPDN, each SAN is provided with a mobile data intermediate station MD-IS, as shown for the SAN 1 in Figure 2. The overall flow of digital packet data in the satellite network is controlled by a network administrator NASS which may conveniently be located at the NMC 14, as shown in Figure 1.

The MSSC 1 is connected to the gateway GW1 so as to provide an output connection to PLMN 9, together with PSDN 8 and PSTN 6 shown in Figure 1. Thus, typically, the packet data will be fed to and from the PSDN 8 and voice signals will be communicated to and from the network PLMN 9 or PSTN 6. It will be understood that all the SANs are of similar construction with a respective VLR_{SAT} to maintain a record of the subscribers registered.

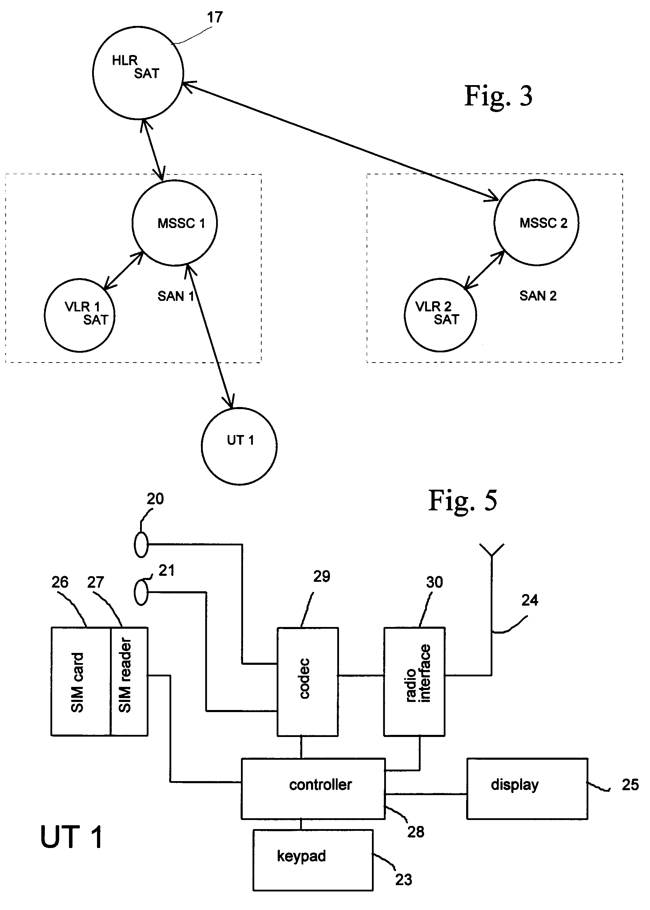

Referring to Figure 3, the satellite network also includes a database 17 referred to herein as the satellite home location register (HLR_{SAT}) that contains records relating to each mobile user terminal UT. The record includes the terminal's identity, namely, its IMSI, the current status of the UT, namely whether it is operating an in a "local" or a "global" mode as will be described in greater detail below, the geographical location of the UT, the home MSSC with which the UT is registered, so as to enable billing and other data to be collected at a single point, and the currently active SAN with which the UT is in communication via a satellite. The HLR_{SAT} 17 may be located at the NMC 14 shown in Figure 1 or may be distributed among the SANs 1, 2, 3 etc.

Referring to Figure 1, the UT 1 may be registered with one of two distinct statuses: "local" in which the UT is permitted to communicate only through one local area or part of the satellite network, and "global" which entitles the UT to communicate through any part of the satellite mobile network, so as to provide global usage.

### GSM Network (PLMN 9)

Referring again to Figure 2, the GSM mobile network 9 includes a number of base transceiver stations BTS 1, 2, 3 etc which are geographically spaced apart in order to support a cellular network in a manner well known ***per se***. Typically, the GSM network has a coverage area that overlies a country or state, and is thus overlaps with the global coverage of the satellite network. BTS 1 is shown with an associated antenna 10, connected by a landline to a base switching centre BSC 1, it being understood that a plurality of BTSs are connected to BSC 1 in a manner well known ***per se****.* The BSC 1 is connected to a mobile switching centre MSC 1 which can route calls within the mobile network and also through a gateway GMSC 1 to a conventional PSTN over line 18, or to the satellite network, over line 19 through the gateway GW 1. Thus, voice channel calls can be routed through the GSM network to and from UT 1. However, the GSM network does not support digital packet data transmission to and from the user terminal UT 1.

A home location register HLR for the land-based GSM network 9 is provided coupled to the GMSC 1. The HLR, in a conventional manner, keeps a record of the IMSIs of the user terminals registered for use with the network and details of the subscribers associated with the IMSIs for billing purposes. The PLMN 9 may also include a visitor location register VLR which maintains a record of subscribers temporarily registered with the network, that have roamed from other GSM networks. For example, if the PLMN 9 is sited in the UK, subscribers from GSM networks in another country e.g. Germany may be locally registered on a temporary basis whilst in the UK. In a conventional manner, telephone usage information is relayed from the VLR through the PSTN 6 to the German network for billing purposes.

An authentication centre AuC is coupled to the HLR. The AuC includes a database of Ki's that are uniquely associated with the IMSIs of individual subscribers, together with the algorithm A3/A8 in accordance with the GSM recommendations, and a random number generator. This stored data is used to authenticate a user terminal, such as the terminal UT 1, as will be explained in more detail hereinafter.

### Mobile user terminal

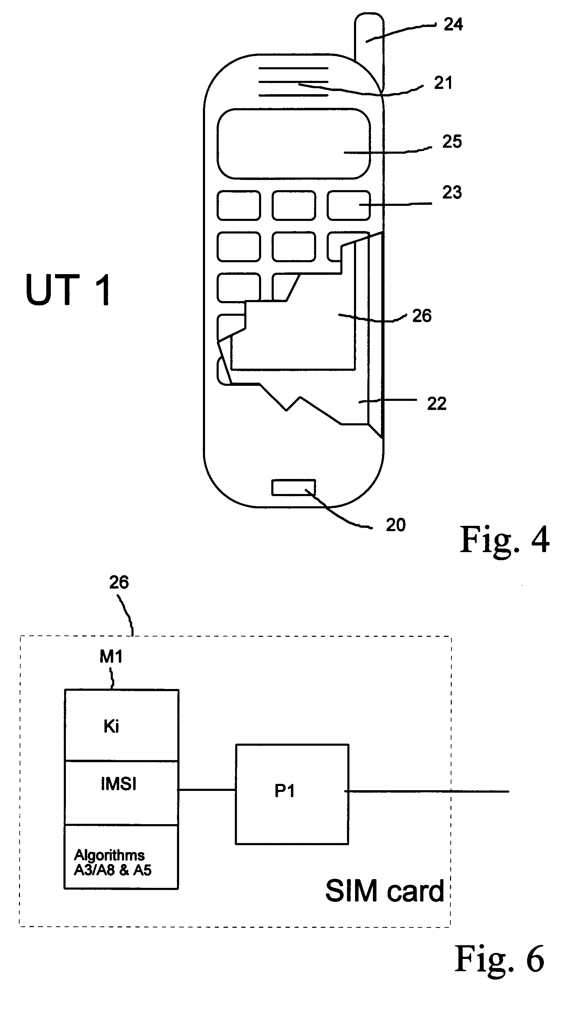

Referring to Figures 4 and 5, the mobile user terminal UT 1 is configured to operate with both the local terrestrial cellular network and the satellite network. Thus, in the example shown in Figure 2, the mobile handset UT 1 can operate either according to a land-based GSM protocol or according to the satellite network protocol. As shown in Figure 4, the user terminal UT 1 comprises a mobile handset which is capable of dual mode operation. It includes conventional GSM circuits for use with the land-based cellular network 9 together with similar circuitry for use with the satellite network. The handset comprises a microphone 20, a speaker 21, a battery 22, a keypad 23, an antenna 24 and a display 25 which can be used amongst other things, for displaying messages transmitted to the terminal over the digital packet data network, via the satellite link. The handheld unit UT 1 also includes a subscriber identification module (SIM) smartcard 26. The circuit configuration of the handset UT 1 is shown in block diagrammatic form in Figure 5. The SIM card 26 is received in an SIM card reader 27 coupled to a controller 28, typically a microprocessor. The microphone and speaker 20, 21 are coupled to a codec 29, coupled to a conventional radio interface 30 connected to the antenna 24 so as to transmit and receive communication signals, in a manner well known ***per se***.

As shown in Fig. 6, the SIM card 26 includes a memory M 1 which stores an individual IMSI together with an identification function Ki which is unique to the SIM, and the algorithms A3/A8 and A5 in accordance with the GSM Recommendations.

### Network selection

As described previously, the networks can be selected in a number of different ways, either automatically depending on factors such as signal strength or manually. In this example, the networks are selected manually by using a key on the keypad 23.

When the keypad 23 is operated to select the satellite network, the controller 28 operates to configure the codec 29 and the radio interface 30 to a frequency and protocol and transmission frequency appropriate for the satellite network. A voice transmission channel can be selected for the satellite network. Additionally, a digital data packet service can be selected through the SPDN e.g. according to the CDPD protocol used hitherto in US AMPS networks. Thus, when the satellite network is selected, both voice channel and packet data communication takes place over the duplex links 1, 2 via the satellite 3a.

When the PLMN 9 (GSM network) is selected, the controller 28 sets the radio interface 30 to operate at a frequency suitable for the land-based GSM network voice channel over the duplex link 11. The GSM network however cannot itself support a digital packet data service.

### Network interworking

Referring again to Figure 2, the satellite network may comprise the ICO™ system which can provide enhanced services not available through a conventional GSM or other land-based cellular network. In this example the GSM network 9 cannot itself support a PDN. It will in some circumstances therefore be desirable to use the satellite network as an extension of the PLMN 9 so as to route calls from the land based mobile network 9 through the satellite network and make use of the additional services available through the satellite network An interworking function unit 31 is provided for this purpose, permitting full control over the service provision between the satellite and cellular land-based networks, thus allowing e-mail and other packet data services to be supported by the GSM network, by using the satellite network.

### Authentication procedure

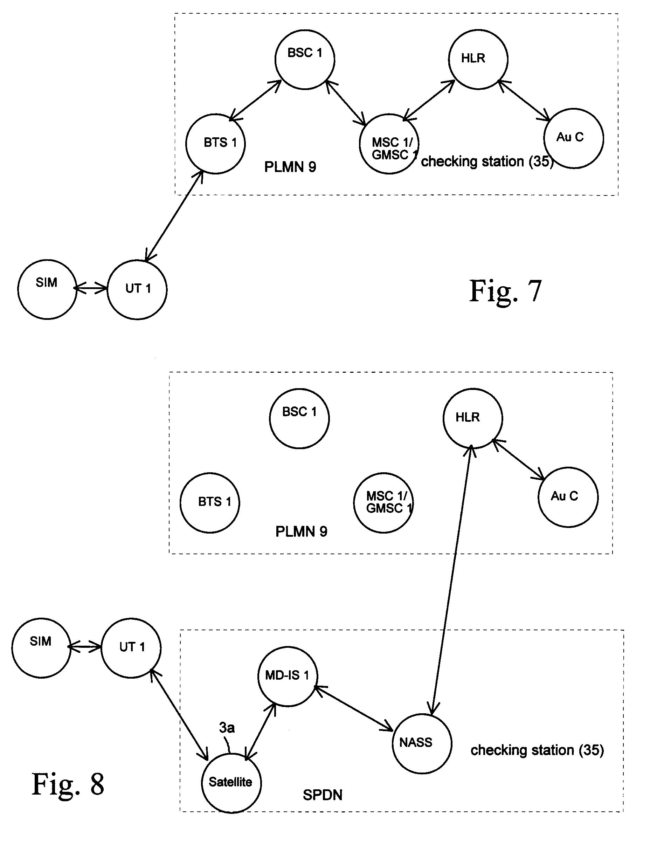

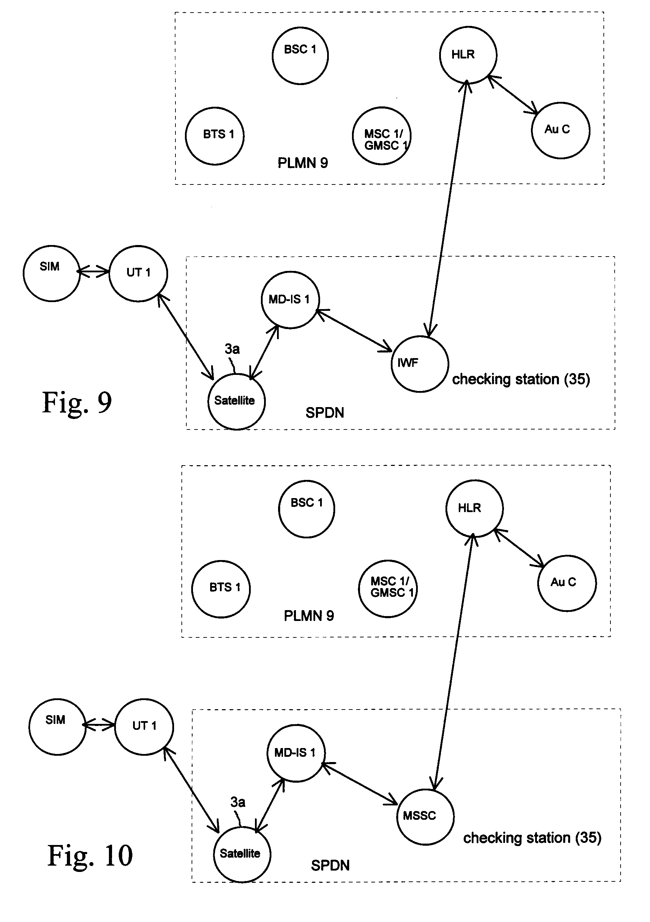

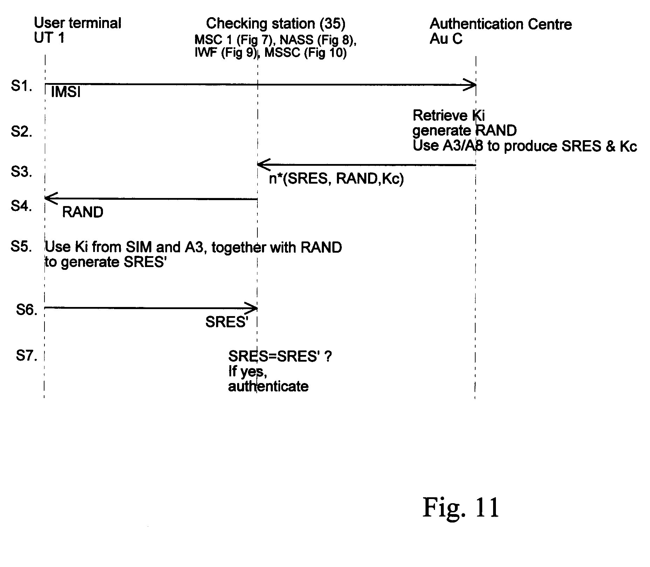

As previously mentioned, when the user terminal UT 1 is switched on, it needs to register with the networks that are to be used for communication purposes and an authentication procedure needs to be carried out in order to determine the authenticity of the user terminal. For the GSM network (PLMN 9) a conventional GSM registration and authentication procedure is carried out which will be explained in more detail hereinafter with reference to Figures 7 and 11.

In accordance with the invention, it has been appreciated that this conventional GSM registration procedure can also be adapted for providing authentication of the user terminal for use with the satellite packet data network SPDN and three examples of how the authentication procedure can be used via the SPDN will be explained with reference to Figures 8, 9 and 10 in combination with Figure 11. The GSM registration and authentication procedure will firstly be described with reference to Figure 7.

### 1. GSM Network (PLMN 9)

As previously mentioned, the user terminal UT 1 includes a SIM smartcard which stores a unique IMSI, a unique identification function Ki and a GSM encryption algorithm A5, according to the GSM Recommendations (Figure 6). The registration and authentication procedure involves transmitting the IMSI to the GSM authentication centre AuC and comparing data from the SIM with data from the authentication centre AuC at a checking station 35. In the conventional GSM authentication procedure, the checking station 35 is located within the GSM network and may be located at MSC 1.

Figure 7 illustrates the data flow between the various components of the GSM network and the user terminal UT 1. The steps of the authentication procedure are set out in Figure 11.

In a first step S1, the IMSI is transmitted from UT 1 via BTS 1, BSC 1 and MSC 1, to the HLR, where it is routed to the authentication centre AuC. As previously mentioned, the authentication centre AuC includes a copy of the identification function Ki associated with each respective IMSI which is valid for use on the GSM network.

At step S2, the IMSI is checked in the memory of the AuC, and a corresponding value of Ki is retrieved. Also, a random number RAND is generated in the AuC using the random number generator (not shown). The random number RAND and the value of Ki are applied, in the AuC, as inputs to the GSM algorithm A3 to generate a signed result SRES. The AuC also includes the GSM algorithm A8 which generates a secret key Kc that is used for encryption/decryption of data transmitted over the air between the user terminal and the land-based network. In practice, the algorithms A3/A8 may be constituted by a single algorithm producing a 96 bit output of which 32 bits constitute SRES and the remaining 64 bits constitute Kc.

At step S3, a triplet of signals comprising RAND SRES and Kc is fed from the authentication centre AuC, through the HLR to the MSC, which acts as checking station 35 in the authentication procedure. In practice, *n* triplets are supplied to the MSC for use in subsequent authentications, for example during a call, but the processing of only one triplet will be considered herein in order to simplify the explanation.

At step S4, the individual value of RAND is transmitted on to the user terminal through the network from the MSC. The SIM of the user terminal UT I stores the algorithm A3/A8 so that, at step S5, a corresponding value of SRES' is generated at the user terminal UT 1 from the received value of the random number RAND and the stored value of Ki in the SIM.

The value of SRES' is transmitted back at step S6 through the network to the MSC and compared at step S7 with the originally generated value of SRES. If they are the same, the user terminal is authenticated but otherwise registration of the user terminal with the HLR is barred.

If the authentication is successful, the MSC initiates encryption/decryption of data transmitted over the network, using an algorithm referred to in the GSM Specifications as A5, which uses as its inputs, the secret key Kc and the frame number of data transmitted through the network. The encryption and decryption may actually be carried out at the BSC or BTS. The SIM of the user terminal UT 1 generates its own value of the secret key Kc using its locally stored copy of the algorithm A8. The local value of Kc at the user terminal UT 1 can then be used to encrypt/decrypt data, using a locally held copy of the algorithm A5.

It will be understood that only essentially random numbers are transmitted over the air interface, which have no relation to one another, which minimises the risk of cloning or unauthenticated use.

In accordance with the invention, it has been appreciated that this general technique can also be used to authenticate the SPDN as will now be explained.

### 2. Satellite Digital Packet Network Authentication

### 2.1 First Embodiment

Referring to Figures 8 and 11, the data flow for authentication of the SPDN will now be explained. The authentication procedure makes use of the IMSI from the SIM and also the stored values of Ki held in the AuC of the GSM network PLMN 9. The procedural steps are generally the same as those shown in Figure 11 but in this case, the checking station 35 comprises the NASS.

In order to authenticate the user terminal UT 1 for use with SPDN, at step S1, the IMSI is transmitted via satellite 3a and MD-IS 1 (associated with SAN 1) via the NASS (associated with NMC 15) and is routed via GW 1 (Figure 1) to PLMN 9, the IMSI being directed to the HLR and the AuC, as shown schematically in Figure 8. Then, as explained with reference to Figure 7, step S2, the IMSI is checked in the memory of the AuC and if valid, a corresponding value of Ki is derived from the memory. Also, an individual value of RAND is generated, and the algorithm A3/A8 operates on RAND and Ki, to produce SRES and Kc.

Then at step S3, the triplet SRES, Kc and RAND are transmitted from the AuC to the checking station 35, namely the NASS.

At step S4, the individual value of RAND is transmitted back through the network, via satellite 3a to the user terminal UT 1 where, at step S5, a corresponding value of SRES' is generated as previously described with reference to Figure 7. At step S6, the generated value of SRES' is transmitted back via satellite 3a and MD-IS 1 to the NASS for comparison with the value of SRES in the triplet previously received from the HLR of the PLMN 9.

At step S7, the values of SRES and SRES' are compared and if they are identical, the user terminal is authenticated for use with the SPDN.

Thus, the procedures described with reference to Figures 7 and 8 allow the user terminal to be authenticated for either the PLMN 9 or the SPDN selectively, so that the user terminal can be used for voice communication over the GSM network, namely PLMN 9, and for packet data communication over the network SPDN, via satellite 3a.

It will be understood that the authentication procedure may be repeated during transmission, for example when the system hands over from one communication cell to another and the other (n-1) triplets can be used for this purpose.

### 2.2 Second Embodiment

Referring to Figure 9, the authentication process shown in Figure 8 can be modified so that the checking of SRES and SRES' (step S7) is carried out at the interworking function unit IWF shown in Figure 2. The IWF thus acts as the checking station 35. Figure 9 illustrates the data flows for use in this embodiment. The value of SRES and the corresponding value of SRES' are produced in the same way as described with reference to Figure 8 (steps S1-S6) but the comparison of the signal values (step S7) is carried out at the IWF.

### 2.3 Third Embodiment

The function of the checking station 35 can also be performed at the MSSC 1 in the appropriate SAN (Figure 2). Referring to Figure 10, the corresponding data flows for the authentication procedure is shown. The value of SRES and the corresponding value of SRES' are produced as previously described and are sent to MSSC 1 for comparison, so as to authenticate the user terminal UT 1 for use with the SPDN.

When both voice and packet data transmission is carried out entirely through the satellite network, over the links 1,2 and the PLMN 9 is not selected, the terminal will be authenticated by means of an authentication centre (not shown) associated with the HLR_{SAT} shown in Fig.1.

Many other modifications fall within the scope of the invention. For example, it will be understood that the PLMN 9 could be operable on a number of different standards and protocols e.g. PHS, PDC in Japan, or DCS 1800 in certain European Countries, or the newly proposed UMTS.

Also, whilst the invention has been described in relation to the ICO™ satellite network, other satellite networks could be used with different satellite constellations and signal transmission protocols.

Also, whilst the signal communication on the paths 1, 2 utilises a TDMA access protocol, other protocols could be used such as code division multiple access (CDMA) or frequency division multiple access (FDMA).

Although for the sake of convenient explanation, the term "mobile" has been used to denote the user terminals UT, it should be understood that this term is not restricted to hand-held or hand portable terminals but includes for example terminals to be mounted on marine vessels or aircraft, or in terrestrial vehicles. Also, it is possible to practice the invention with some of the terminals UT being completely or at least partially immobile.

## Claims

1. A method of authenticating a mobile user terminal for use with a first or a second mobile network providing coverage in a common area, wherein the user terminal is operable according to a predetermined authentication procedure which makes use of an individual identification code held in the user terminal and a corresponding identification code held at a remote authentication centre, the method comprising:
accessing the authentication centre through a selected one of the networks to retrieve authentication data corresponding to the identification code stored in the user terminal; and
performing an authentication of the user terminal for the selected network, using the authentication data retrieved from the authentication centre and data from the user terminal.

2. A method according to claim 1 wherein the first network supports transmission of signals in a first mode and the second network supports transmission of signals in a second mode.

3. A method according to claim 2 wherein the first mode signals comprise voice channel signals, and the second mode signals comprise digital packet data signals.

4. A method according to any preceding claim wherein the first network is a satellite telecommunications network and the second network is a PLMN.

5. A method of authenticating a mobile user terminal for use with a first mobile network, wherein the user terminal is operable with a second mobile network providing coverage in a common area with the first network and which uses a predetermined authentication procedure for the user terminal, the procedure making use of an individual identification code held in the user terminal and a corresponding identification code held at a location in the second network, the method comprising:
accessing the second network from the first network to retrieve authentication data corresponding to the identification code held at said location in the second network; and
performing an authentication of the user terminal in the first network, using the authentication data retrieved from the second network and data from the mobile terminal.

6. A method according to claim 6 wherein the first network is a satellite telecommunications network and the second network is a PLMN.

7. A method of authenticating a mobile user terminal for use with a digital packet data network, wherein the user terminal is operable for voice channel communication with a mobile network which uses a predetermined authentication procedure for the voice channel, the procedure making use of an individual identification code held in the user terminal and a corresponding identification code held at a location in the network that provides the voice channel, the method comprising:
accessing the mobile network that provides the voice channel, from the digital packet data network to retrieve authentication data corresponding to the identification code held at said location in the mobile network that provides the voice channel; and
performing an authentication of the user terminal in the digital packet data network, using the authentication data retrieved from the mobile network and data from the mobile terminal.

8. A method according to claim 7 wherein the digital packet data network utilises a satellite communication link to the mobile user terminal, and the voice channel is provided by a land based public mobile network.

9. A method according to claim 7 or 8 including:
transmitting identification data corresponding to the identification code stored at the user terminal, from the terminal to the digital packet data network;
routing the identification data from the digital packet data network to an authentication centre in the voice network;
deriving the authentication data from the authentication centre in response to the identification data;
interrogating the mobile terminal for data corresponding to authentication data; and
comparing data derived from the terminal in response to the interrogation, with the authentication data, to determine whether the terminal may be used on the digital packet data network.

10. A method according to claim 9 including:
routing the authentication data to a checking location in the digital packet data network; and
comparing the data derived from the terminal in response to the interrogation, with the authentication data, at the checking location.

11. A method according to claim 9 or 10 wherein the mobile terminal stores said individual identification code and an individual identification function, and the authentication centre also includes said identification code and said individual identification function.

12. A telecommunications system including:
at least part of first and second mobile networks providing coverage in a common area for communication with a mobile user terminal operable according to a predetermined authentication procedure which makes use of an individual identification code held in the user terminal,
an authentication centre that includes authentication data corresponding to the identification code stored in the user terminal;
means for directing data from the user terminal corresponding to the identification code either from the first network or the second network to the authentication centre to retrieve the authentication data corresponding to the identification code; and
means for performing an authentication of the user terminal for the selected network, using the authentication data retrieved from the authentication centre and data from the user terminal.
